Europäisches Patentamt

European Patent Office

Office européen des brevets

(11) Publication number: **0 080 808**
**B1**

## EUROPEAN PATENT SPECIFICATION

(45) Date of publication of patent specification: **15.01.86**

(51) Int. Cl.⁴: **B 01 D 3/00, C 07 C 11/09**

(21) Application number: **82305731.0**

(22) Date of filing: **28.10.82**

(54) **Distillation apparatus.**

(30) Priority: **30.10.81 CA 389083**

(43) Date of publication of application:
**08.06.83 Bulletin 83/23**

(45) Publication of the grant of the patent:
**15.01.86 Bulletin 86/03**

(84) Designated Contracting States:
**BE DE FR GB IT**

(56) References cited:
**DE-A-1 794 153**
**DE-A-2 212 845**
**DE-A-2 707 507**
**DE-A-2 802 198**
**US-A-4 177 111**
**US-A-4 230 535**

(73) Proprietor: **POLYSAR LIMITED**
**Sarnia Ontario N7T 7M2 (CA)**

(72) Inventor: **Ahlberg, David Ture**
**1035 Errol Road East**
**Sarnia Ontario (CA)**

(74) Representative: **Perry, Robert Edward et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention is directed to a distillation apparatus for the fractionation of a hydrocarbon stream wherein an overhead vapor stream is compressed with a concurrent increase in temperature and the compressed vapor stream is heat exchanged with a recycled bottom liquid stream of the distillation apparatus.

The purification of hydrocarbons by fractional distillation is a well known process used commercially throughout the petrochemical industry. It is also a process known to require a considerable input of energy which has conventionally been steam. Because many such processes utilize a high reflux ratio, that is much of the hydrocarbon is recycled to the distillation tower in order to obtain a pure product, the energy input per unit of purified product is high. As the cost of providing energy, especially steam, increases the incentive increases to develop alternative means providing at least part of the energy. One such method of providing at least part of the necessary energy is to use a heat pump wherein a stream is compressed with a concurrent increase in temperature, and the compressed stream is heat exchanged with another stream in the distillation apparatus. British Patent 1,452,377 describes a fractional distillation process wherein an overhead vapor fraction is compressed with an increase in temperature, the latent heat of condensation of the compressed stream is exchanged with a distillation column stream, the compressor is driven by a turbine using vapor such as steam as the motive fluid and using the latent heat of condensation of the motive fluid exhaust to heat, by heat exchange, a distillation column stream. U.S. Patent 4,177,111 describes a process for the recovery of dimethylacylamides by preconcentrating a stream containing dimethylacylamide and water in a distillation column, compressing the overhead vapour stream from the distillation column and using the latent heat of condensation of the compressed overhead vapour to heat the distillation column.

The apparatus illustrated in US—A—4177111 comprises first and second distillation columns; a compressor; and first and second heat-exchange means; means for supplying a feed to about the mid-point of the first distillation column; means for passing a portion of the bottoms from the first distillation column to towards the top of the second distillation column; means for circulating a portion of the bottoms from the first distillation column to one side of the first heat-exchange means; means for circulating bottoms from the second distillation column to one side of the second heat-exchange means; means for removing a high-boiling component from the bottom of the second distillation column; means for circulating an overhead from the first distillation column, via the compressor, to the other side of the first heat-exchange means; and means for supplying hot water or steam to the other side of the second heat-exchange means.

Apparatus according to the present invention has the given features of that of US—A—4177111, and comprises additionally both means for passing an overhead from the second distillation column to towards the bottom of the first distillation column, and also means for removing, as purified product, without recirculation via the compressor, an overhead from the first distillation column.

A process according to the present invention, for distilling a $C_4$ hydrocarbon feed, comprises passing the feed to distillation apparatus of the invention, to provide isobutylene as purified product and bottoms containing high-boiling impurities selected from diisobutylene, tert-butyl alcohol, butane and cis- and trans-2-butene.

It is known to use a compressor to provide a stream, at elevated pressure and temperature, which may be used as a source of energy to supply heat to a distillation column. However, the efficiency of use of such a heat pump system depends on the temperature difference between the overhead vapour stream and the bottom stream of the distillation column. As the temperature difference increases, both the energy required to operate the compressor and the installed power of the motor to drive the compressor increase. Effective use can only be made of such a heat pump system when it is applied to a distillation process in which the high boiling impurities have boiling points not substantially different, i.e. usually not more than about 25—30 C degrees different, from the boiling point of the lower boiling component to be purified, or when the high boiling impurities are present in sufficiently small quantities that they do not cause a significant increase in the boiling temperature of the bottoms stream of the distillation column.

In the present invention, use is made of the basic knowledge of how to operate a heat pump system efficiently. A second distillation column is used to purify the bottoms stream of the first distillation column, and an overhead from the second column is returned to the first column. The impurities can be removed as a bottoms stream from the second distillation column, which allows the first distillation column to be operated with a relatively small temperature differential between the overhead and bottoms streams. A heat pump system can thus be used efficiently with the overhead stream, without excessive power requirements for the compressor of the heat pump system, to provide heat to the bottoms stream for operation of the first distillation column.

Heat-exchange means described herein may be defined as working by passing streams to opposite "sides" of the exchanger. This will generally involve indirect heat-exchange within any one heat-exchange means.

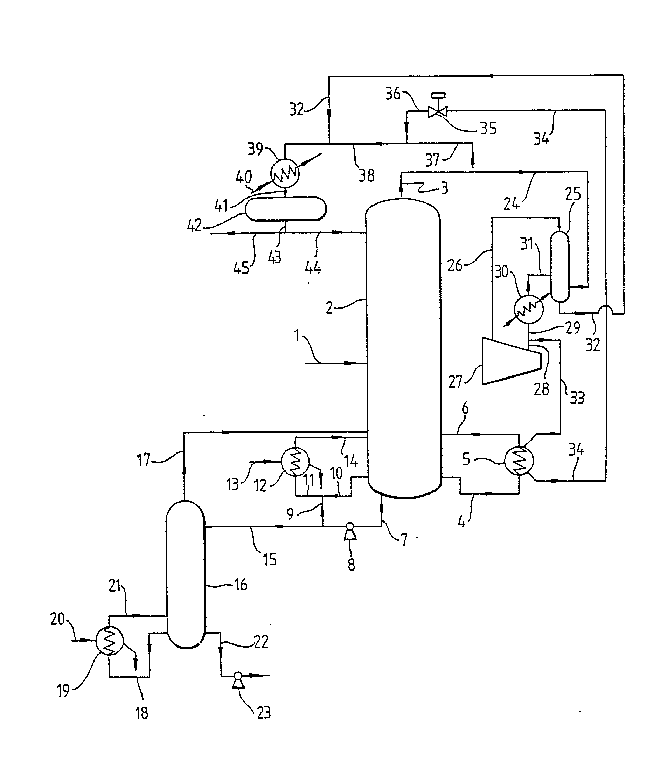

The invention will now be described by way of example only with reference to the accompanying drawing, a schematic representation of distillation apparatus according to the present invention.

The accompanying drawing shows apparatus including a line 1 which supplies an organic hydrocarbon feed to about the mid-point of a first distillation column 2. The overhead vapour from the distillation column is removed through a line 3 which supplies both of two lines 24 and 37. Line 37 supplies a portion of the overhead stream to a line 38 which in turn supplies it to a heat-exchanger 39. Heat-exchanger 39 is cooled by water supplied through a line 40; the overhead stream is subjected therein to indirect heat-exchange and condensed to provide a liquid stream in a line 41 which feeds the liquid stream into a reflux drum 42. Liquid from the reflux drum is supplied by a line 43 to two lines 44 and 45, line 44 supplying the liquid back to the distillation column 2 for reflux purposes and line 45 supplying the liquid, as purified product, to suitable storage or removal means (not shown). The overhead vapor in line 24 is supplied to drum 25 wherein any liquid can be separated from the vapor and removed by line 32 and supplied to line 38. The vapor passes by line 26 to compressor 27 and leaves the compressor by line 28 as a compressed stream. The compressed stream may be passed during start-up operations by line 29 to the water cooled indirect heat exchanger 30 and the liquified stream then fed back to drum 25. During normal operations, the compressed stream is passed by line 33 through heat exchanger 5 to line 34, pressure reducing valve 35 and line 36 into line 38. Heat exchanger 5 is supplied with a portion of the first distillation column bottoms stream through line 4 and the column bottoms are subjected to indirect heat exchange with the compressed stream in line 33 and then passed back into the column by line 6. A second portion of the first distillation column bottoms stream is removed by line 7 through pump 8 to line 9 or line 15. The bottoms stream in line 15 is supplied to the second distillation column 16 wherein it is subjected to fractional distillation to provide an overhead stream which is supplied by line 17 to a lower point of the first distillation column. Energy to operate the second distillation column is supplied by passing a portion of the bottoms stream by line 18 to heat exchanger 19 wherein it is subjected to indirect heat exchange with hot water or steam supplied by line 20 and the so-heated stream is then passed by line 21 back into the distillation column. A high boiling compound stream is removed from the bottom of the second distillation column by line 22 and may be provided by pump 23 to suitable further handling means (not shown). A further portion of the bottoms stream from distillation column 2 may be taken by line 10 and line 11 into heat exchanger 12 wherein it may be subjected to indirect heat exchange with hot water or stream supplied by line 13 and then returned by line 14 to the distillation column.

To illustrate the use of apparatus according to this invention, distillation apparatus as shown in the drawing was used to purify a $C_4$ hydrocarbon feed comprising 97% by weight isobutylene and, as the major impurities, a mixture of butenes, tertiary-butyl alcohol and di-isobutylene. The distillation column 2 was equipped with 100 plates and the distillation column 16 was equipped with 6 plates. The hydrocarbon feed was supplied at a rate of about 15,900 kg per hour by line 1, to distillation column 2, at a temperature of about 52°C and a pressure of about 6 kg/cm².

Purified isobutylene (at 99.7% by weight isobutylene) was removed through line 45 at a rate of about 15,100 kg per hour. A high-boiling component stream, comprising (weight %) about 44% isobutylene, about 11% butene-2, and 4% tertiary-butyl alcohol and about 40% diisobutylene, was removed by line 22 from the bottom of distillation column 16, at a rate of about 800 kg per hour. Recovery of isobutylene from the feed was about 97.7% by weight.

The bottoms stream from column 2 was supplied by line 15 to column 16 at a rate of about 8000 kg per hour and overhead vapour was returned from column 16 by line 17 to column 2, at a rate of about 7200 kg per hour. About 85% of the overhead vapour stream from column 2 was supplied to compressor 27; the vapour supplied to the compressor was at a temperature of about 50°C and a pressure of about 5.5 kg/cm². The compressed vapour in line 33 from the compressor was at a pressure of about 9 kg/cm² and a temperature of about 73°C. This compressed vapour was supplied to heat-exchanger 5, in which it was in indirect heat-exchange with a bottoms stream from column 2, thereby supplying heat for the operation of column 2. The compressed vapour fed to the heat-exchanger was essentially completely condensed to the liquid phase within the heat-exchanger, was removed by line 34 at a temperature of about 66°C and a pressure of about 8.8 kg/cm², and passed via pressure-reducing valve 35 to heat-exchanger 39 and then to reflux drum 42.

The energy input necessary to operate the apparatus was predominantly provided by the energy obtained from heat-exchanger 5 and 19. Heat-exchanger 12 was only used for balancing the energy needs; the energy obtained therefrom constituted only about 3—5% of that necessary to operate column 2. For the two columns, the energy necessary to operate column 16 was only about 5 to 10% of that necessary to operate the whole, and a portion of that energy was used to operate column 2 by virtue of the supply of hot vapour in line 17. Under normal operating conditions, the energy necessary to operate compressor 27 represented about 40 to 50% of the total energy necessary to operate the apparatus.

## Claims

1. Distillation apparatus which comprises first and second distillation columns (2 and 16); a compressor (27); and first and second heat-exchange means (5 and 19); means (1) for supplying a feed to about the mid-point of the first distillation column (2); means (7) for passing a portion of the bottoms from the first distillation column (2) to towards the top of the second distillation column (16); means (4) for circulating a portion of the bottoms from the first distillation column (2) to one side of the first heat-exchange means (5); means (18) for circulating bottoms from the second distillation column (16) to one side of the second heat-exchange means (19); means (22) for removing a high-boiling component from the bottom of the second distillation column (16); means (3) for circulating an overhead from the first distillation column (2), via the compressor (27), to the other side of the first heat-exchange means (5); and means (26) for supplying hot water or steam to the other side of the second heat-exchange means (19); characterised in that the apparatus additionally comprises both means (17) for passing an overhead from the second distillation column (16) to towards the bottom of the first distillation column (2), and also means (37) for removing, as purified product, without recirculation via the compressor (27), an overhead from the first distillation column (2).

2. Apparatus according to claim 1, wherein the means (3) for removing purified product comprises third heat-exchange means (39); a reflux drum (42); means (37) for passing overhead from the first distillation column (2) and circulated overhead to one side of the heat-exchange means (39); means for passing water to the other side of the third heat-exchange means (39); and distribution means (43) for removing purified product as such and for circulating the product to the first distillation column (2).

3. Apparatus according to claim 2, which additionally comprises a fourth heat-exchange means (12); means (10) for passing bottoms from the first distillation column (2) to one side of the fourth heat-exchange means (12); and means (13) for supplying hot water or steam to the other side of the fourth heat-exchange means (12).

4. Apparatus according to any preceding claim, wherein the first and second distillation columns (2 and 16) have 70 to 100 and 5 to 20 plates, respectively.

5. A process for distilling a $C_4$ hydrocarbon feed, which comprises passing the feed to distillation apparatus as claimed in any preceding claim, to provide isobutylene as purified product and bottoms containing high-boiling impurities selected from diisobutylene, *tert*-butyl alcohol, butane and *cis*- and *trans*-2-butene.

**Patentansprüche**

1. Destillationsvorrichtung aus einer ersten und einer zweiten Destillationssäule (2 und 16), einem Kompressor (27) und einer ersten und zweiten Wärmeaustauscheinrichtung (5 und 19), einer Einrichtung (1) zum Zuführen einer Beschickung zu etwa dem Mittelpunkt der Destillationssäule (2), einer Einrichtung (7) zum Transportieren eines Teils der Bodenfraktion aus der ersten Destillationssäule (2) zu dem Oberteil der zweiten Destillationssäule (16), einer Einrichtung (4) zum Umlaufenlassen eines Teils der Bodenfraktion von der ersten Destillationssäule (2) zu einer Seite der ersten Wärmeaustauschereinrichtung (5), einer Einrichtung (18) zum Umlaufenlassen von Bodenfraktionen von der zweiten Destillationssäule (16) zu einer Seite der zweiten Wärmeaustauschereinrichtung (19), einer Einrichtung (22) zur Entfernung einer hochsiedenden Komponente von dem Bodenteil der zweiten Destillationssäule (16), einer Einrichtung (3) zum Umlaufenlassen einer Überkopffraktion aus der ersten Destillationssäule (2) über den Kompressor (27) zu der anderen Seite der ersten Wärmeaustauschereinrichtung (5) und einer Einrichtung (26) zum Zuführen von heißem Wasser oder Wasserdampf zu der anderen Seite der zweiten Ionenaustauschereinrichtung (19), dadurch gekennzeichnet, daß die Vorrichtung zusätzlich sowohl eine Einrichtung (17) zum Transportieren einer Überkopffraktion von der zweiten Destillationssäule (16) zu dem Boden der ersten Destillationssäule (2) als auch eine Einrichtung (37) zur Entfernung einer Überkopffraktion aus der ersten Destillationssäule (2) als gereinigtes Produkt ohne Rückführen über den Kompressor (27) aufweist.

2. Vorrichtung nach Anspruch 1, dadurch gekennzeichnet, daß die Einrichtung (3) zur Entfernung von gereinigtem Produkt eine dritte Wärmeaustauschereinrichtung (39), eine Rückflußtrommel (42), eine Einrichtung (37) zum Transport einer Überkopffraktion von der ersten Destillationssäule (2), die über Kopf zu einer Seite der Wärmeaustauschereinrichtung (39) rückgeführt wird, eine Einrichtung zum Transport von Wasser zu der anderen Seite der dritten Ionenaustauschereinrichtung (39) und eine Verteilereinrichtung (43) zur Entfernung von gereinigtem Produkt als solches und zum Rückführen des Produktes zu der ersten Destillationssäule (2) aufweist.

3. Vorrichtung nach Anspruch 2, dadurch gekennzeichnet, daß sie zusätzlich eine vierte Wärmeaustauschereinrichtung (12), eine Einrichtung (10) zum Transport von Bodenfraktionen von der ersten Destillationssäule (2) zu einer Seite der vierten Wärmeaustauschereinrichtung (12) und eine Einrichtung (13) zum Zuführen von heißem Wasser oder Wasserdampf zu der anderen Seite der vierten Wärmeaustauschereinrichtung (12) aufweist.

4. Vorrichtung nach einem der vorhergehenden Ansprüche, dadurch gekennzeichnet, daß die erste und zweite Destillationssäule (2 und 16) 70 bis 100 bzw. 5 bis 20 Böden aufweisen.

5. Verfahren zum Destillieren einer $C_4$-Kohlenwasserstoffbeschickung, dadurch gekennzeichnet, daß die Beschickung der Vorrichtung gemäß einem der vorhergehenden Ansprüche zur Gewinnung von Isobutylen als gereinigtem Produkt und einer Bodenfraktion, die hochsiedende Verunreinigungen enthält, ausgewählt aus Diisobutylen, tert.-Butylalkohol, Butan sowie cis- und trans-2-Buten, zugeführt wird.

## Revendications

1. Appareil de distillation, qui comprend une première et une seconde colonne de distillation (2 et 16); un compresseur (27); et un premier et un second dispositif d'échange de chaleur (5 et 19); des moyens (1) d'introduction d'une charge vers le milieu de la première colonne de distillation (2); des moyens (7) de transfert d'une portion des queues de la première colonne de distillation (2) à la partie supérieure de la seconde colonne de distillation (16); des moyens (4) permettant de faire circuler une portion des queues de la première colonne de distillation (2) vers un côté du premier dispositif (5) d'échange de chaleur; des moyens (18) permettant de faire circuler les queues de la seconde colonne de distillation (16) vers un côté du second dispositif (19) d'échange de chaleur; des moyens (22) permettant de soutirer un composant de haut point d'ébullition de la partie inférieure de la seconde colonne de distillation (16); des moyens (3) permettant de faire circuler un courant de tête de la première colonne de distillation (2), en passant par le compresseur (27), vers l'autre côté du premier dispositif d'échange de chaleur (5); et des moyens (26) permettant de faire arriver de l'eau chaude ou de la vapeur d'eau à l'autre côté du second dispositif (19) d'échange de chaleur; caractérisé en ce qu'il comprend en outre des moyens (17) de transfert d'une fraction de tête de la seconde colonne de distillation (16) vers la base de la première colonne de distillation (2), ainsi que des moyens (37) permettant de séparer, comme produit purifié, sans recyclage par le compresseur (27), une fraction de tête de la première colonne de distillation (2).

2. Appareil suivant la revendication 1, dans lequel les moyens (3) permettant de séparer un produit purifié comprennent un troisième dispositif d'échange de chaleur (39); un tambour de reflux (42); un dispositif (37) de transfert de la fraction de tête de la première colonne de distillation (2) et de la fraction de tête recyclée vers un côté du dispositif d'échange de chaleur (39); des moyens permettant de faire passer de l'eau vers l'autre côté du troisième dispositif d'échange de chaleur (39); et un distributeur (43) permettant de séparer le produit purifié tel quel et de le faire circuler vers la première colonne de distillation (2).

3. Appareil suivant la revendication 2, qui comprend en outre un quatrième dispositif d'échange de chaleur (12); un système (10) de transfert des queues de la première colonne de distillation (2) à un côté du quatrième dispositif d'échange de chaleur (12); et des moyens (13) servant à faire arriver de l'eau chaude ou de la vapeur d'eau à l'autre côté du quatrième dispositif d'échange de chaleur (12).

4. Appareil suivant l'une quelconque des revendications précédentes, dans lequel les première et deuxième colonnes de distillation (2 et 16) ont respectivement 70 à 100 et 5 à 20 plateaux.

5. Procédé de distillation d'une charge d'hydrocarbures en $C_4$, qui consiste à faire passer la charge dans un appareil de distillation suivant l'une quelconque des revendications précédentes pour obtenir de l'isobutylène comme produit purifié et des queues contenant des impuretés de haut point d'ébullition choisies entre le diisobutylène, l'alcool tertio-butylique, le butane et les cis- et trans-2-butènes.